# EUROPEAN PATENT APPLICATION

(11) **EP 4 583 252 A1**
(43) Date of publication of application: **09.07.2025**
(21) Application number: 24863081.6
(22) Date of filing: 21.08.2024
(51) Int. Cl.: H01M 10/615, H01M 10/643, H01M 10/653, H01M 10/6551, H01M 10/6554, H01M 10/6567, H01M 10/637, H01M 10/623, H01M 50/213, H01M 50/289

(54) **BATTERY MODULE HAVING HEATING FUNCTION**

(30) Priority: 07.09.2023 KR 20230118914
(71) Applicant: LG Energy Solution, Ltd., Seoul 07335 (KR)
(72) Inventor: CHOI, Jun Young, Daejeon 34122 (KR); LEE, Hyun Jong, Daejeon 34122 (KR); KIM, Jae Sang, Daejeon 34122 (KR); JEONG, Han Yong, Daejeon 34122 (KR)
(74) Representative: Plasseraud IP
(86) International application number: PCT/KR2024/012463
(87) International publication number: WO 2025/053500

(57) **Abstract**

Disclosed is a battery module with a heating function, and more particularly a battery module including a plurality of cylindrical battery cells, a first frame having a receiving hole configured to receive the plurality of cylindrical battery cells, a second frame having a plurality of holes incised so as to each have a predetermined area in one side surface thereof, the second frame being coupled to the first frame, a heat conduction pad located inside the second frame, the heat conduction pad being configured to cover the plurality of holes, and a receiving frame having a space portion configured to receive a heating solution and an operation unit configured to activate the heating solution, wherein a heat conduction unit for heat conduction is provided in the receiving frame.

## Description

### [Technical Field]

This application claims the benefit of priority to Korean Patent Application No. 2023-0118914 filed on September 7, 2023, the disclosure of which is incorporated herein by reference in its entirety.

The present invention relates to a battery module with a heating function, and more particularly to a battery module with a heating function capable of preventing the battery module from being unable to be charged at low temperatures.

### [Background Art]

With recent development of alternative energies due to air pollution and energy depletion caused as the result of use of fossil fuels, demand for secondary batteries capable of storing electrical energy that is produced has increased.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, secondary batteries are not charged even if electricity is supplied below a certain temperature, and it is difficult to charge small secondary batteries in winter.

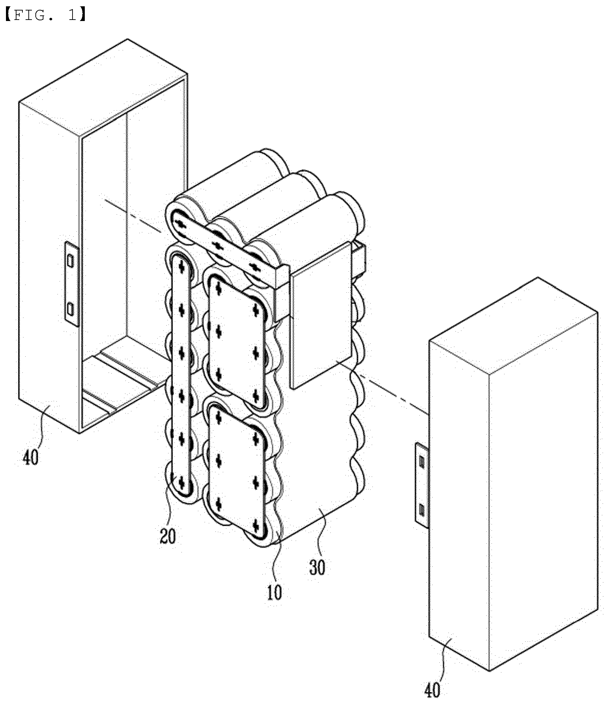

FIG. 1 is an exploded perspective view showing a conventional battery module. As shown in FIG. 1, the conventional battery module includes a plurality of battery cells 10, a terminal 20 configured to electrically connect the plurality of battery cells 10 to each other, a holder case 30 configured to support side surfaces of the battery cells 10, and a module case 40 configured to receive the aforementioned components.

The conventional battery module does not have a separate temperature control function for measuring and regulating the temperature of the battery cells 10.

Accordingly, the conventional battery module has the problem that, when the conventional battery module is mounted in a small device, charging may not proceed in an environment with a low temperature, such as in winter, resulting in the inability to use the device in which the conventional battery module is mounted.

### (Prior Art Document)

(Patent Document 1) Korean Patent Application Publication No. 2012-0054337

### [Disclosure]

### [Technical Problem]

The present invention has been made in view of the above problems, and it is an object of the present invention to provide a battery module assembly with a fire extinguishing function capable of extinguishing a fire in the battery module assembly when a fire occurs in a battery cell received in the battery module assembly, thereby preventing the fire in the battery module assembly from spreading to a battery module assembly adjacent thereto and a battery pack including the same.

It is another object of the present invention to provide a battery module assembly with a fire extinguishing function capable of reliably exhausting the air in the vicinity of a battery module and further increasing space utilization and a battery pack including the same.

It is a further object of the present invention to provide a battery module assembly with a fire extinguishing function having a structure capable of discharging heat generated by a battery module to the outside when the battery module is normally operated and a battery pack including the same.

### [Technical Solution]

A battery module with a heating function according to the present invention to accomplish the above objects includes a plurality of cylindrical battery cells (100),
a first frame (200) having a receiving hole (210) configured to receive the plurality of cylindrical battery cells (100), a second frame (300) having a plurality of holes (310) incised so as to each have a predetermined area in one side surface thereof, the second frame being coupled to the first frame (200), a heat conduction pad (400) located inside the second frame (300), the heat conduction pad being configured to cover the plurality of holes (310), and a receiving frame (500) having a space portion that is configured to receive a heating solution (510) and an operation unit (520) configured to activate the heating solution (510), wherein a heat conduction unit (530) for heat conduction is provided in the receiving frame (500).

Also, in the battery module according to the present invention, the heat conduction pad (400) may have a recess (410) configured to receive a part of each cylindrical battery cell (100) at the position corresponding to the plurality of cylindrical battery cell (100).

Also, in the battery module according to the present invention, the plurality of holes (310) may be formed at the positions corresponding to the recesses (410).

Also, in the battery module according to the present invention, the operation unit (520) may include a vertical portion (521) extending inwardly of the receiving frame (500), the vertical portion having a predetermined space portion, a indented portion (522) located at an end of the vertical portion (521), the indented portion being indented in the direction toward the space portion of the vertical portion (521), and a bar-shaped pressing member (523) configured such that one side of the pressing member is in tight contact with the indented portion (522) and the other side of the pressing member protrudes outside of the receiving frame (500).

Also, in the battery module according to the present invention, the pressing member (523) may be provided at an outwardly protruding part thereof with an operation control portion (524) configured to control movement of the pressing member (523).

Also, in the battery module according to the present invention, the operation unit may further include a switch cap portion (525) configured to cover the outwardly protruding part of the pressing member.

Also, in the battery module according to the present invention, the heat conduction unit (530) may be located such that one side of the heat conduction unit is in tight contact with the heat conduction pad (400) through the plurality of holes (310).

Also, in the battery module according to the present invention, the heat conduction unit (530) may include a tight contact portion (531) in tight contact with the heat conduction pad (400) and a plurality of extension fin portions (532) extending from the tight contact portion (531) in the direction toward the inside of the receiving frame.

Also, in the battery module according to the present invention, a thermally conductive adhesive member may be applied between the heat conduction pad (400) and the tight contact portion (531).

Also, in the battery module according to the present invention, the receiving frame (500) may be provided on an outer surface having a display unit (600) configured to display when the operation unit (520) needs to be operated.

Also, in the battery module according to the present invention, the display unit (600) may be provided with a battery management system (BMS).

Also, in the battery module according to the present invention, the battery management system (BMS) may be connected to the operation control portion (524) via a connection portion (610), and may be connected to a temperature sensor (620) mounted in the space portion of the receiving frame (500).

Also, in the battery module according to the present invention, the heating solution (510) may be a supersaturated solution.

Also, in the battery module according to the present invention, the supersaturated solution may be a supersaturated aqueous solution of sodium acetate.

### [Advantageous Effects]

As is apparent from the above description, a battery module according to the present invention has the advantage that a heating solution, which is a supersaturated solution, is provided, whereby the battery module may be heated at a low temperature to create a state in which the battery module can be charged.

In addition, the battery module according to the present invention has the advantage that a heat conduction pad and a heat conduction unit are provided, whereby the heat generated by the heating solution may be more efficiently transferred to a cylindrical battery cell.

### [Description of Drawings]

FIG. 1 is an exploded perspective view showing a conventional battery module.
FIG. 2 is a perspective view showing a battery module according to a preferred embodiment of the present invention.
FIG. 3 is an exploded perspective view showing the battery module according to the preferred embodiment of the present invention.
FIG. 4 is a sectional view showing the battery module according to the preferred embodiment of the present invention.
FIG. 5 is an exploded perspective view showing a second frame and a heat conduction pad according to a preferred embodiment of the present invention.
FIG. 6 is a perspective view showing the battery module according to the preferred embodiment of the present invention before a heat conduction unit is attached thereto.
FIG. 7 is a view showing the operation of an operation unit according to a preferred embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery module with a heating function according to the present invention will be described with reference to the accompanying drawings.

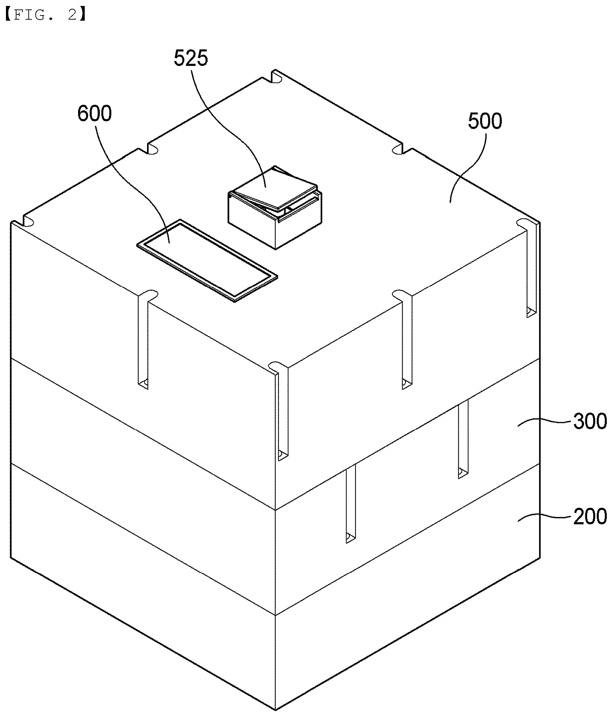

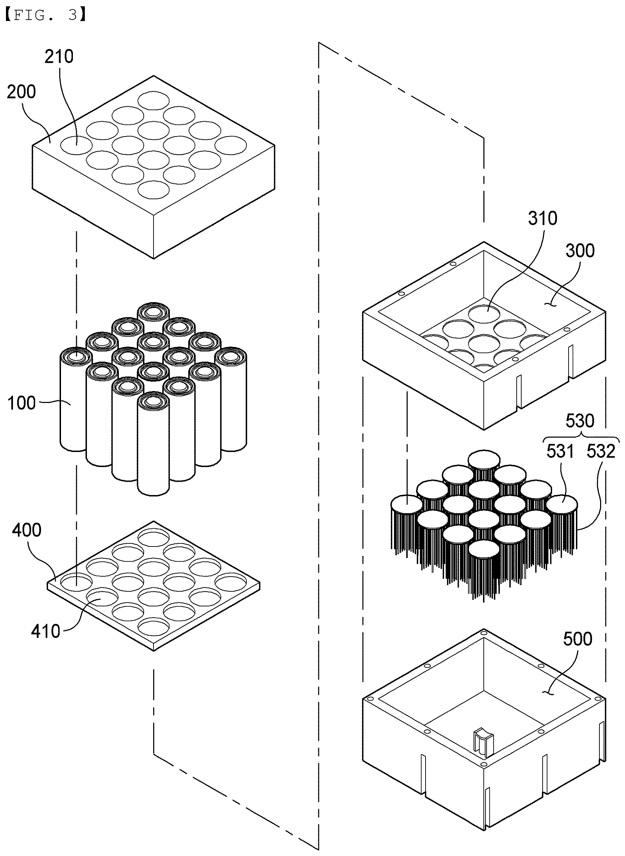

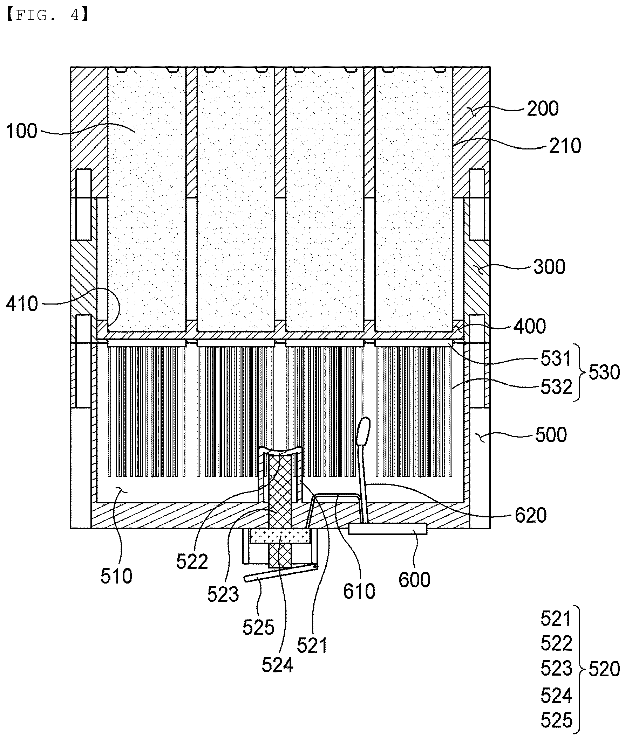

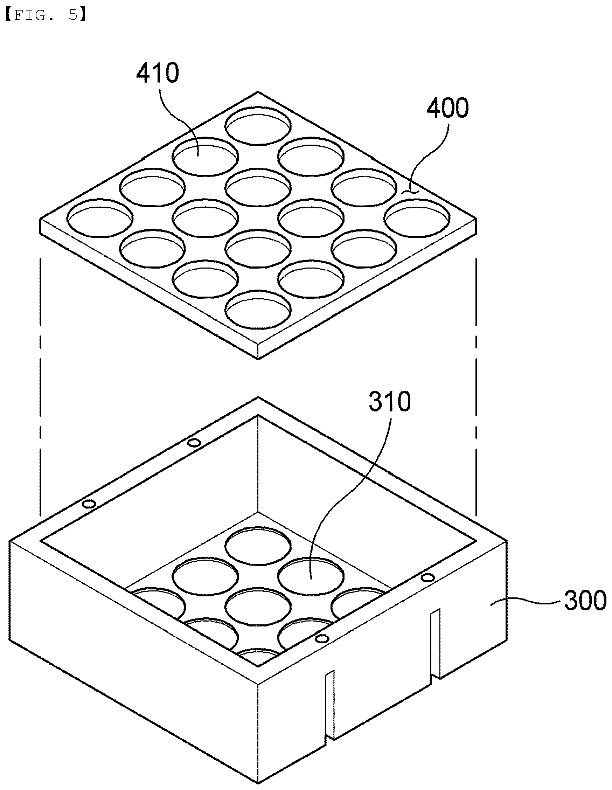

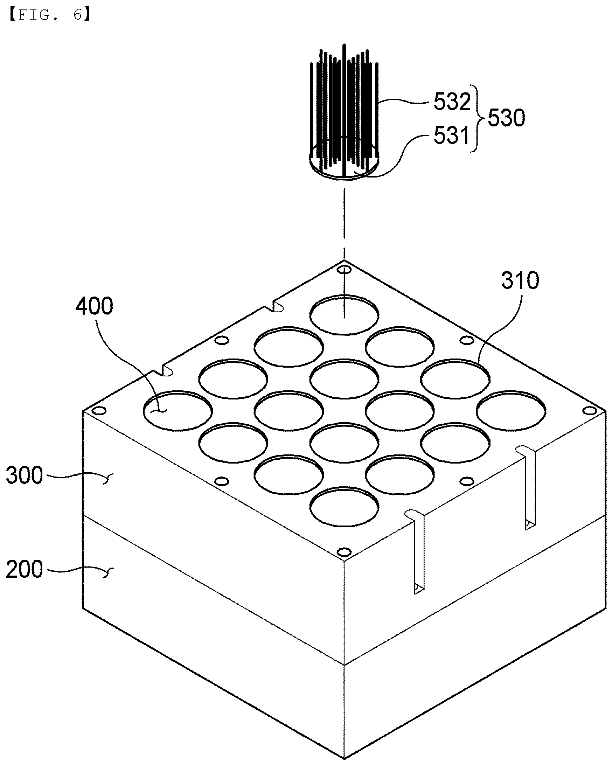

FIG. 2 is a perspective view showing a battery module according to a preferred embodiment of the present invention, FIG. 3 is an exploded perspective view showing the battery module according to the preferred embodiment of the present invention, FIG. 4 is a sectional view showing the battery module according to the preferred embodiment of the present invention, FIG. 5 is an exploded perspective view showing a second frame and a heat conduction pad according to a preferred embodiment of the present invention, and FIG. 6 is a perspective view showing the battery module according to the preferred embodiment of the present invention before a heat conduction unit is attached thereto.

As shown in FIGs. 2 to 6, the battery module according to the present invention includes a cylindrical battery cell 100, a first frame 200, a second frame 300, a heat conduction pad 400, a receiving frame 500, and a display unit 600.

First, the cylindrical battery cell 100 includes an electrode assembly, a cap assembly, and a cylindrical battery case configured to receive the electrode assembly and the cap assembly.

The electrode assembly may be a jelly-roll type electrode assembly, which is configured to have a structure in which a long sheet type negative electrode and a long sheet type positive electrode are wound in the state in which a separator is interposed therebetween.

The positive electrode includes a positive electrode current collector and a positive electrode active material applied to each of an upper surface and a lower surface of the positive electrode current collector.

In general, the positive electrode current collector may have a thickness of 3 to 500 µm. The positive electrode current collector is not particularly restricted as long as the positive electrode current collector exhibits high conductivity while the positive electrode current collector does not induce any chemical change in a battery. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase adhesion of the positive electrode active material, or may be configured in any of various forms, such as a film, a sheet, a foil, a net, a porous body, a foam body, and a non-woven fabric body.

A layered compound, such as lithium cobalt oxide (LiCoO₂) or lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂) ; a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; Fe₂(MoO₄)₃, or LiNiₓMn₂₋ₓO₄ (0.01 ≤ x ≤ 0.6) may be used as the positive electrode active material.

Meanwhile, the positive electrode active material may be mixed with a conductive agent and a binder, and a filler may be further added as needed.

The conductive agent is generally added in an amount of 1 to 50 wt% based on the total weight of the mixture including the positive electrode active material. The conductive agent is not particularly restricted as long as the conductive agent exhibits high conductivity while the conductive agent does not induce any chemical change in a battery. For example, graphite, such as natural graphite or artificial graphite; carbon black, such as carbon black, acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used as the conductive agent.

The binder is a component assisting in binding between the positive electrode active material and the conductive agent and in binding with the current collector. The binder is generally added in an amount of 1 to 50 wt% based on the total weight of the mixture including the positive electrode active material. As examples of the binder, there may be used polyvinylidene fluoride, polyvinyl alcohol, carboxymethylcellulose (CMC), starch, hydroxypropylcellulose, regenerated cellulose, polyvinyl pyrrolidone, tetrafluoroethylene, polyethylene, polypropylene, ethylene-propylene-diene terpolymer (EPDM), sulfonated EPDM, styrene butadiene rubber, fluoro rubber, and various copolymers.

The negative electrode includes a negative electrode current collector and a negative electrode active material applied to each of an upper surface and a lower surface of the negative electrode current collector.

The negative electrode current collector is generally manufactured so as to have a thickness of 3 to 500 µm. The negative electrode current collector is not particularly restricted as long as the negative electrode current collector exhibits high conductivity while the negative electrode current collector does not induce any chemical change in a battery. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy.

In addition, the negative electrode current collector may have a micro-scale uneven pattern formed on the surface thereof in order to increase adhesion of the negative electrode active material, or may be configured in any of various forms, such as a film, a sheet, a foil, a net, a porous body, a foam body, and a non-woven fabric body.

As the negative electrode active material, for example, there may be used carbon, such as non-graphitizing carbon or graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material, or a Si-based material, such as Si, SiO, SiO₂, or a mixture thereof; however, the present invention is not limited thereto.

Of course, the negative electrode active material may be further mixed with a conductive agent and a binder, and the negative electrode current collector may be coated with the mixture.

The conductive agent is a component configured to further improve conductivity of the negative electrode active material, and carbon black, such as acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used in a certain proportion.

The binder is a component assisting in binding between the negative electrode active material and the conductive agent and in binding with the current collector, and may include at least one selected from the group consisting of styrene butadiene rubber (SBR), acrylonitrile butadiene rubber, acrylic rubber, butyl rubber, fluoro rubber, polyvinyl alcohol, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), and polyacrylamide (PAM).

The separator prevents short circuit between the positive electrode and the negative electrode and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

The cap assembly is located on the top of the electrode assembly, is electrically connected to a positive electrode tab of the electrode assembly, and is coupled to an upper end of the battery case, which is open, to seal the electrode assembly received in the battery case.

Specifically, in the cap assembly, a current interrupting member, a current interrupting gasket, a safety vent, a PTC element, and a top cap are sequentially stacked from the bottom, and a crimping gasket is located at outer edges of the current interrupting member and the top cap.

The current interrupting member, which is also called a current interrupt device (CID), is located on the top of the electrode assembly, and the positive electrode tab is connected to a lower surface of the current interrupting member at a predetermined position.

The safety vent, which is formed to protrude downward in the center and has one or more first notches, is located on the top of the current interrupting member. The safety vent interrupts current and exhausts the gas in the event of an increase in pressure in the battery case, and is disposed such that one surface of the safety vent is in contact with the PTC element and an edge surface of the safety vent is in contact with the crimping gasket.

The current interrupting gasket is located such that the current interrupting member and the safety vent remain electrically isolated from each other except for downwardly protruding portions of the current interrupting member and the safety vent.

The battery case receives the electrode assembly and the cap assembly, and a negative electrode tab extends downward and is connected to the bottom of the battery case such that the bottom of the battery case can act as a negative electrode.

As described above, the crimping portion, which is configured to seal the cap assembly while wrapping around an outer side surface of the cap assembly, is provided at an upper end of the cylindrical battery case, and an inwardly indented beading portion is provided under the crimping portion to securely fix the electrode assembly and the cap assembly while protecting the electrode assembly and the cap assembly from external impact.

Next, the first frame 200 is configured to protect the cylindrical battery cell 100 from external impact or the like, may have a hexahedral shape, and is provided with a receiving hole 210 configured to receive and enclose a part of the cylindrical battery cell 100.

The first frame 200 may be of a height capable of receiving about half of the cylindrical battery cell 100 when the cylindrical battery cell 100 is received in the receiving hole 210.

The second frame 300 is configured to protect a part of the cylindrical battery cell 100 not received in the first frame 200 from external impact or the like, and may be in the shape of a hexahedron with one side open, and a hole 310 formed through the second frame 300 may be provided on the other side surface of the second frame.

Here, the first frame 100 and the second frame 200 may be fastened and fixed to each other using a bolt in a state of being in tight contact with each other, and a fastening method is not particularly restricted as long as the first frame 100 and the second frame 200 can be fixed to each other in a state of being in tight contact with each other.

The heat conduction pad 400 may be located inside the surface of the second frame 300 where the hole 310 is formed, and may be in the shape of a rectangular sheet.

The heat conduction pad 400 may have a receiving recess 410 configured to receive a part of the cylindrical battery cell 100 at the position corresponding to the cylindrical battery cell 100, and the receiving recess 410 may increase the contact surface area between the heat conduction pad 400 and the cylindrical battery cell 100, thereby improving heat conduction efficiency.

The heat conduction pad 400 may be made of a material having thermal conductivity and electrical insulation, may include, for example, a silicone-based material, and is not particularly restricted as long as the heat conduction pad is made of a material having excellent thermal conductivity and electrical insulation.

The receiving frame 500 may be formed in the shape of a hexahedron with one side open, may have a space portion having a predetermined volume, and may include a heating solution 510, an operation unit 520, and a heat conduction unit 530.

The heating solution 510 may be received in the space portion formed by the receiving frame 500, and may be a supersaturated solution.

The supersaturated solution may be, for example, an aqueous solution that is supersaturated with sodium acetate, and the supersaturated solution undergoes phase change and dissipates heat when impact is applied thereto.

In addition, the supersaturated solution has the advantage of being recyclable, as the supersaturated solution can be returned to the supersaturated solution state if heat is applied after the phase change is completed while heat is dissipated.

The operation unit 520 is formed on one side of the receiving frame 500, and includes a vertical portion 521, a indented portion 522, a pressing member 523, an operation control portion 524, and a switch cap portion 525.

The vertical portion 521 extends inwardly of the receiving frame 500 and forms the space portion.

The indented portion 522 may be located at the extended end of the vertical portion 521 and may be formed in a indented shape in the direction toward the space portion formed by the vertical portion 521.

Here, each of the vertical portion 521 and the indented portion 522 may be made of an elastic material.

The pressing member 523 may be located in the space portion of the vertical portion 521, and may be configured in a bar shape such that one side of the pressing member is in tight contact with the indented portion 522 and the other side of the pressing member protrudes outwardly of the receiving frame 500.

The operation control portion 524 may be configured to wrap around a side surface of the pressing member 523 that protrudes outwardly of the receiving frame 500, and may be located such that one side of the operation control portion is in tight contact with the receiving frame 500.

The operation control portion 524 may fix the pressing member 523 to restrict the movement thereof or release the fixed state thereof to allow the pressing member 523 to move according to a received signal.

In one example, the operation control portion 524 may be in the shape of a gripper that wraps around the pressing member 523, and is not particularly restricted as long as the operation control portion has a structure capable of fixing the movement of the pressing member 523 and releasing the fixed state of the pressing member.

The switch cap portion 525 may be constituted by a side surface part configured to wrap around the pressing member 523 and the operation control portion 524 exposed outside the receiving frame 500 and an upper surface part connected to one side of the side surface part by hinge or the like.

The upper surface part of the switch cap portion 525 is in tight contact with the pressing member 523, whereby pressing force may be transmitted to the pressing member 523 when the upper surface part is pressed.

In this case, a method of connecting the side surface part and the upper surface part of the switch cap portion 525 to each other is not particularly restricted as long as the pressure is transmitted to the pressing member 523 when pressed in the state of being connected to each other such that the pressing member 523 can be moved.

The heat conduction unit 530 is configured to transfer heat generated when the heating solution 510 undergoes phase change to the cylindrical battery cell 100, and may include a tight contact portion 531 and an extension fin portion 532.

The tight contact portion 531 is configured to transfer heat generated when the heating solution 51 undergoes phase change to the cylindrical battery cell 100, and may be located so as to be in tight contact with the heat conduction pad 400 exposed through the hole 310 of the second frame 300.

The tight contact portion 531 may be in the form of a thin sheet, and may be formed in a horizontal sectional shape corresponding to the hole 310. Preferably, the area of the tight contact portion 531 is less than or equal to the area of the hole 310.

This is because, if the area of the tight contact portion 531 is greater than the area of the hole 310, tight contact between the tight contact portion 531 and the heat conduction pad 400 may not be properly achieved.

The extension fin portion 532 may be formed by extending from one side surface of the tight contact portion 531 in the direction toward the space portion of the receiving frame 500, and may be in the shape of a plurality of thin pins.

As described above, the extension fin portion 532 has the advantage of being formed in the shape of a plurality of thin pins to form a larger contact area per unit volume with the heating solution 510, thereby improving heat exchange efficiency.

Next, the display unit 600 is provided on an outer surface of the receiving frame 500, and may be formed in a structure in which a part of the display unit is received in the receiving frame 500 as needed. The display unit 600 may be provided with a battery management system (BMS).

The display unit 600 may display whether the battery module needs to be heated and whether the operation unit 520 needs to be operated, may be, for example, a display capable of displaying text, and may be further provided with a connection portion 610 and a temperature sensor 620.

The connection portion 610 connects the display unit 600 and the operation control portion 524 to each other such that an electrical signal can be transmitted to control the movement of the pressing member 523 through the operation control portion 524.

The temperature sensor 620 extends from the display unit 600, measures the temperature of the heating solution 510 received in the receiving frame 500, and provides a measured value that is considered in displaying whether the operation unit 520 is to be operated on the display unit 600.

In one example, the display unit 600 may display that the operation unit 520 does not need to be operated when the temperature of the cylindrical battery cell 100 is equal to or less than a reference value and the temperature of the heating solution 510 measured through the temperature sensor 620 is high.

In this case, the reference value may be 5 °C, which is the minimum temperature at which charging can be performed, more preferably 15 °C, at which smooth charging can be performed.

In addition, the display unit 600 may display that the operation unit 520 needs to be operated when the temperature of the cylindrical battery cell 100 is equal to or less than the reference value and the temperature of the heating solution 510 measured through the temperature sensor 620 is low.

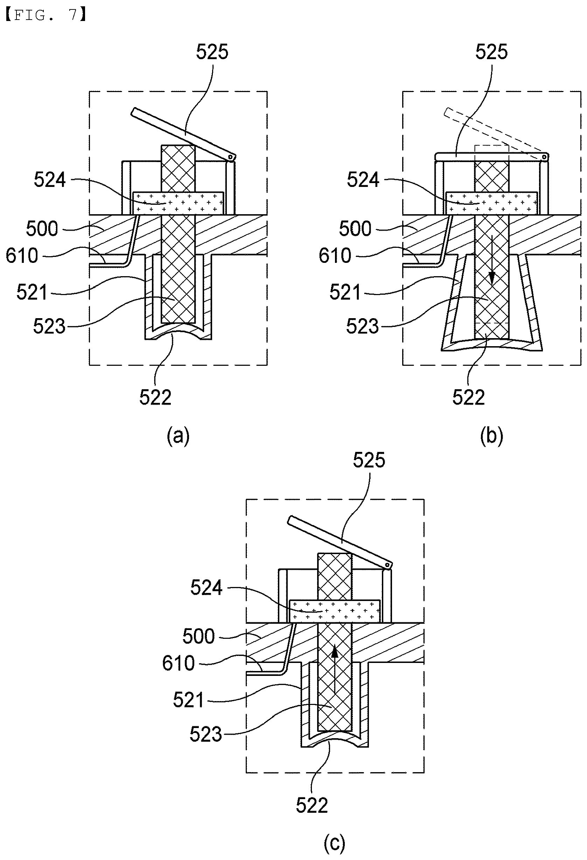

FIG. 7 is a view showing the operation of an operation unit according to a preferred embodiment of the present invention.

When describing the operation of the operation unit 520 with further reference to FIGs. 2 to 6, the operation control portion 524 holds the pressing member 523 in a fixed state when the display unit 600 displays that the operation unit does not need to be operated, as shown in FIG. 7(a).

When the measured temperature of the cylindrical battery cell 100 is equal to or less than the reference value and the temperature of the heating solution 510 is low, the display unit 600 displays that that the operation unit needs to be operated. At this time, the operation control portion 524 releases the fixed state of the pressing member 523 such that the pressing member 523 can move.

Here, pressing the switch cap portion 525 causes the pressing member 523 to move downward, whereby the indented portion 522 is spread out and impact is generated, which may cause the heating solution 510 to undergo phase change and generate heat.

When the pressure applied to the switch cap portion 525 is released, as shown in FIG. 7(c), elastic impact is further applied to the heating solution 510 as the vertical portion and the indented portion return to positions before pressing due to the elastic properties thereof, causing phase change in the heating solution 510.

Those skilled in the art to which the present invention pertains will appreciate that various applications and modifications are possible within the category of the present invention based on the above description.

### (Description of Reference Numerals)

- 100:: Cylindrical battery cell
- 200:: First frame
- 210:: Receiving hole
- 300:: Second frame
- 310:: Hole
- 400:: Heat conduction pad
- 410:: Recess
- 500:: Receiving frame
- 510:: Heating solution
- 520:: Operation unit
- 521:: Vertical portion 522: Indented portion
- 523:: Pressing member 524: Operation control portion
- 525:: Switch cap portion
- 530:: Heat conduction unit
- 531:: Tight contact portion 532: Extension fin portion
- 600:: Display unit
- 610:: Connection portion
- 620:: Temperature sensor

## Claims

1. A battery module comprising:
a plurality of cylindrical battery cells;
a first frame having a receiving hole configured to receive the plurality of cylindrical battery cells;
a second frame having a plurality of holes incised so as to each have a predetermined area in one side surface thereof, the second frame being coupled to the first frame;
a heat conduction pad located inside the second frame, the heat conduction pad being configured to cover the plurality of holes; and
a receiving frame having a space portion that is configured to receive a heating solution and an operation unit configured to activate the heating solution, wherein
a heat conduction unit for heat conduction is provided in the receiving frame.

2. The battery module according to claim 1, wherein the heat conduction pad has a recess configured to receive a part of each cylindrical battery cell at a position corresponding to the plurality of cylindrical battery cell.

3. The battery module according to claim 2, wherein the plurality of holes is formed at positions corresponding to the recesses.

4. The battery module according to claim 1, wherein the operation unit comprises:
a vertical portion extending inwardly of the receiving frame, the vertical portion having a predetermined space portion;
a indented portion located at an end of the vertical portion, the indented portion being indented in a direction toward the space portion of the vertical portion; and
a bar-shaped pressing member configured such that one side of the pressing member is in tight contact with the indented portion and the other side of the pressing member protrudes outside of the receiving frame.

5. The battery module according to claim 4, wherein the pressing member is provided at an outwardly protruding part thereof with an operation control portion configured to control movement of the pressing member.

6. The battery module according to claim 4, wherein the operation unit further comprises a switch cap portion configured to cover an outwardly protruding part of the pressing member.

7. The battery module according to claim 2, wherein the heat conduction unit is located such that one side of the heat conduction unit is in tight contact with the heat conduction pad through the plurality of holes.

8. The battery module according to claim 7, wherein the heat conduction unit comprises:
a tight contact portion in tight contact with the heat conduction pad; and
a plurality of extension fin portions extending from the tight contact portion in a direction toward an inside of the receiving frame.

9. The battery module according to claim 8, wherein a thermally conductive adhesive member is applied between the heat conduction pad and the tight contact portion.

10. The battery module according to claim 5, wherein the receiving frame is provided on an outer surface having a display unit configured to display when the operation unit needs to be operated.

11. The battery module according to claim 10, wherein the display unit is provided with a battery management system (BMS).

12. The battery module according to claim 11, wherein the battery management system (BMS) is connected to the operation control portion via a connection portion, and is connected to a temperature sensor mounted in the space portion of the receiving frame.

13. The battery module according to claim 1, wherein the heating solution is a supersaturated solution.

14. The battery module according to claim 13, wherein the supersaturated solution is a supersaturated aqueous solution of sodium acetate.
